**Europäisches Patentamt**

**European Patent Office**

**Office européen des brevets**

(19)

(11) Veröffentlichungsnummer: **0 089 052**

**A2**

(12) **EUROPÄISCHE PATENTANMELDUNG**

(21) Anmeldenummer: **83102515.0**

(22) Anmeldetag: **15.03.83**

(51) Int. Cl.³: **G 01 N 27/70**

(30) Priorität: **16.03.82 DE 3209438**

(43) Veröffentlichungstag der Anmeldung:
**21.09.83 Patentblatt 83/38**

(84) Benannte Vertragsstaaten:
**AT CH FR GB IT LI SE**

(71) Anmelder: **Wünning, Joachim, Dr.-Ing.**
**Bergstrasse 20**
**D-7250 Leonberg 7 (Warmbronn)(DE)**

(72) Erfinder: **Wünning, Joachim, Dr.-Ing.**
**Bergstrasse 20**
**D-7250 Leonberg 7 (Warmbronn)(DE)**

(74) Vertreter: **Wilhelm, Hans-Herbert, Dr.-Ing. et al,**
**Patentanwälte Dr.-Ing. Hans-Herbert Wilhelm Dipl.-Ing.**
**Hanjörg Dauster Gymnasiumstrasse 31B**
**D-7000 Stuttgart 1(DE)**

(54) Verfahren und Messeinrichtung zur Bestimmung der Aktivität des Kohlenstoffes in Ofenatmosphären.

(57) Es wird ein Verfahren zur Bestimmung der Aktivität des Kohlenstoffes in Ofenatmosphären o.dgl. beschrieben, bei dem das Partialdruckverhältnis des Sauerstoffes im Ofengas gegenüber einem Vergleichsgas mit Hilfe der von sauerstoffionenleitenden Feststoffzellen abgegebenen elektrischen Spannung festgestellt wird. Dabei wird als Vergleichsgas das Ofengas vorgesehen, das bei Ofentemperatur mit Kohlenstoff ins Boudouard-Gleichgewicht gebracht wird. Es wird außerdem dafür gesorgt, daß der Gasaustausch in der Vergleichsanordnung mit einer Zeitkonstanten von 1/10 der des Ofens stattfindet. Es wird dann der Vorteil erreicht, daß sich die Aktivität des Kohlenstoffes nach einer Formel berechnen oder eichen läßt, in der zwar die von den Feststoffzellen abgegebene elektrische Spannung und auch die absolute Temperatur enthalten ist, jedoch nicht der CO-Gehalt und auch nicht der Druck. Das neue Verfahren kann daher ohne Berücksichtigung des CO-Gehaltes in der Ofenatmosphäre arbeiten und vermeidet damit die Nachteile der bekannten Meßverfahren.

Fig.1

EP 0 089 052 A2

Croydon Printing Company Ltd.

0089052

Verfahren und Meßeinrichtung zur Bestimmung der Aktivität des
Kohlenstoffes in Ofenatmosphären

---

Die Erfindung betrifft ein Verfahren und eine Meßeinrichtung zur
Bestimmung der Aktivität des Kohlenstoffes in Ofenatmosphären
o.dgl., bei dem das Partialdruckverhältnis des Sauerstoffes im
Ofengas gegenüber einem Vergleichsgas mit Hilfe der von sauerstoffionenleitenden Feststoffzellen abgegebenen elektrischen
Spannung festgestellt wird.

Es ist bekannt, daß bei der Wärmebehandlung von Stahl in bestimmten Fällen, insbesondere bei der Aufkohlung der Kohlenstoffpegel (C-Pegel oder C-Potential genannt) der Ofenatmosphäre gemessen und geregelt wird. Der C-Pegel ist eine eindeutige Funktion der Aktivität des Kohlenstoffes $a_C$, d.h.
dessen Dampfdruckverhältnis gegenüber der reinen Phase (Graphit).
Zur Bestimmung der Aktivität $a_C$ von Ofenatmosphären werden die
eingangs erwähnten Verfahren eingesetzt.

Wie bei den ebenfalls bekannten, älteren Verfahren der Tau-
punkts- und $CO_2$-Messung muß auch bei dem eingangs genannten
Verfahren der CO-Gehalt der Ofenatmosphäre berücksichtigt
werden, weil der Sauerstoffdruck vom Verhältnis $P^2_{CO2}/P^2_{CO}$,
die Aktivität $a_C$ dagegen vom Verhältnis $P^2_{CO}/P_{CO2}$ abhängt.
Man hat zur Lösung dieses Problemes verschiedene Methoden angewandt. So wird bei der sogenannten Trägergasmethode ein
Trägergas mit konstantem CO-Gehalt in so großer Menge zugeführt, daß bei wechselndem Zusatz von Kohlungsgas der CO-
Anteil in der Ofenatmosphäre sich nicht wesentlich verändert.
Der Nachteil ist ein relativ hoher Energie- und Gasverbrauch.
Bekannt ist es auch, durch Kombination bestimmter Alkohole
einen konstanten CO-Gehalt im Ofen anzustreben, wobei hier
der Nachteil eingehandelt wird, daß hinsichtlich der Wahl
des Kohlungsmittels eine Einschränkung in Kauf genommen werden
muß. Man hat auch schon mit einer zusätzlichen Meßeinrichtung
den CO-Gehalt im Ofen laufend kontrolliert und entsprechend
den C-Pegel korrigiert. Nachteil eines solchen Verfahrens ist
der hohe Investitions- und Wartungsaufwand.

Der vorliegenden Erfindung liegt daher die Aufgabe zugrunde,
ein Verfahren der eingangs genannten Art so zu gestalten, daß
ohne einen zusätzlichen Energieverbrauch mit einfachen Mitteln
die gewünschte Bestimmung der Aktivität des Kohlenstoffes
möglich ist. Gleichzeitig soll auch eine geeignete Meßzelle
geschaffen werden, mit der dieses Ziel erreicht werden kann.

Die Erfindung besteht zunächst bei einem Verfahren der eingangs genannten Art darin, daß als Vergleichsgas das Ofengas
vorgesehen ist, das bei Ofentemperatur mit Kohlenstoff ins
Boudouard-Gleichgewicht gebracht wird. Dieses Verfahren weist
den Vorteil auf, daß sich die Aktivität des Kohlenstoffes nach
einer Formel berechnen oder eichen läßt, in der zwar die von
den Feststoffzellen abgegebene elektrische Spannung und auch
die absolute Temperatur enthalten ist, jedoch nicht der CO-Gehalt und auch nicht der Druck. Das neue Verfahren kann daher ohne Berücksichtigung des CO-Gehaltes in der Ofenatmosphäre arbeiten und vermeidet damit die Nachteile der bekannten Meßverfahren.

Wichtig ist es, bei dem neuen Verfahren den Gasaustausch in der Vergleichsanordnung in einer bestimmten Zeit durchzuführen, die ausreichend groß ist, um einerseits das Boudouard-Gleichgewicht zu erreichen, andererseits aber den Verbrauch des Kohlenstoffes im Hinblick auf die Lebensdauer der verwendeten Meßzelle nicht zu hoch werden zu lassen, dennoch aber die zeitlichen Schwankungen des CO-Gehaltes im Ofen mit möglichst geringer Dämpfung auf die Vergleichsanordnung zu übertragen, um den Meßfehler geringzuhalten. Es hat sich als vorteilhaft erwiesen, wenn der Gasaustausch in der Vergleichsanordnung mit einer Zeitkonstante in der Größenordnung von 1/10 des Ofens stattfindet, so daß eine Zeit zwischen 20 und 100 Sekunden die günstigsten Werte für die Messung ergibt. Dabei ist von den folgenden Überlegungen ausgegangen:

Der Gasaustausch in der für die Durchführung des neuen Verfahrens verwendeten Meßzelle, auf deren Ausbildung noch eingegangen wird, wird durch die Zeitkonstante $k = V/G$ gekennzeichnet ($V$ = Volumen, $G$ = Gasstrom). Diese Zeitkonstante muß Forderungen genügen, die sich teilweise widersprechen.

1. Das Boudouard-Gleichgewicht muß in der Vergleichsanordnung nämlich nahezu vollständig eingestellt werden ($a_C$ $\geq$ 0,99), um Meßfehler zu vermeiden. Es wird daher eine große Zeitkonstante gefordert.

2. Da die Aktivität von Aufkohlungsatmosphären üblicherweise unter 1 liegt, wird der Kohlenstoff in der verwendeten Meßzelle um so schneller aufgebraucht, je größer der Gasaustausch ist. Es ergibt sich also auch hier die Forderung nach einer möglichst großen Zeitkonstante.

3. Um die zeitlichen Schwankungen des CO-Gehaltes im Ofen
   mit möglichst geringer Dämpfung auf die Vergleichsanordnung übertragen zu können, wird eine kleine Zeitkonstante gefordert.

Diese drei Forderungen werden in vorteilhafter Weise erfüllt,
wenn die Zeitkonstante für den Gasaustausch in der Vergleichsanordnung, wie erwähnt etwa 1/10 der des Gasaustausches im
Ofen entspricht. Es wurde nämlich erkannt, daß die Zeitkonstante der CO-Änderungen in Aufkohlungsöfen nach den Spülgesetzen um etwa zwei Größenordnungen höher liegt als die
der eigentlichen Meßgröße (Sauerstoff), die von der Geschwindigkeit chemischer Reaktionen abhängt. Entsprechend kann der
Gasaustausch in der Vergleichsanordnung gedämpft werden.

Da unter technischen Bedingungen die Zeitkonstante der CO-
Änderung in Aufkohlungsanlagen in der Regel zwischen 200 und
1000 Sekunden liegt, wird die Zeitkonstante der eigentlichen
Meßzelle etwa 20 bis 100 Sekunden betragen müssen. Es hat
sich gezeigt, daß sich damit das gewünschte Boudouard-Gleichgewicht einstellt, ohne daß jedoch die Kohlenstoffüllung in
der Vergleichsanordnung zu schnell verbraucht wird. Die
Kohlenstoffüllung wird nach etwa $10^6$ Zeitkonstanten bis auf
die Hälfte aufgebraucht, so daß also auch bei Dauerbetrieb
eine Lebensdauer von über einem Jahr erreicht werden kann.

Der Temperatureinfluß auf das Meßergebnis ist gering. Die
Aktivität des Kohlenstoffes wird nach der Formel $a_C = \exp(-23,3 \times E/T)$
berechnet. Hierbei bedeutet E die Zellenspannung
in mV, T die absolute Temperatur in K. Man erkennt, daß der
Temperatureinfluß geringer ist als bei den herkömmlichen Meßverfahren. Bei Ofenatmosphären mit einer Aktivität $a_C > 0,9$,

wie sie beispielsweise bei der Aufkohlung in der ersten Prozeßphase und bei der neutralen Glühung kohlenstoffreicher
Stähle auftritt, kann auf eine Temperaturkompensation ganz
verzichtet werden. Die Temperaturkompensation kann in allen
anderen Fällen mit der Ofenmeßstelle vorgenommen werden,
die ohnehin vorhanden ist.

Zur Durchführung des neuen Verfahrens wird vorteilhaft eine
Meßeinrichtung verwendet, die mit zwei durch das sauerstoffionenleitende Material getrennten Meßräumen versehen ist,
denen mindestens je eine Elektrode zugeordnet ist, wie das
auch bei dem bekannten Meßverfahren der Fall war. Das Neue
ist, daß eine Meßzelle vorgesehen ist, die mit Kohlenstoff
gefüllt und über eine Öffnung mit der Ofenatmosphäre oder
mit einer Meßkammer verbunden ist, die ihrerseits von der
Ofenatmosphäre beaufschlagt wird. In einfacher Weise besteht
die Meßzelle aus einem einseitig geschlossenen Elektrolytrohr,
das an der offenen Seite mit einem Stopfen mit den Verbindungsöffnungen zur Ofenatmosphäre abgeschlossen ist. An diesem
Elektrolytrohr sind an der geschlossenen Seite innen und
außen die Elektroden angebracht. Diese Ausgestaltung weist
neben der Möglichkeit einer kompakten Anordnung auch den
großen Vorteil auf, daß es wesentlich kürzer ausgebildet
sein kann und auch nicht mit Druckkräften belastet ist, sondern innen und außen den gleichen Druck aufweist. Es ist
daher gegenüber den Meßrohren bekannter Ausbildungen wesentlich weniger bruchanfällig.

Die Außenelektrode kann in einem das Elektrolytrohr ummantelnden Schutzrohr aufgenommen werden, welches zusätzlich auch
mit Öffnungen für den Zutritt der Ofengase versehen oder mit
einem Anschluß zur zwangsweisen Zuführung von Ofengas versehen werden kann. Eine baulich einfache Ausführung ergibt
sich, wenn die Größe der Verbindungsöffnungen im Stopfen des
Elektrolytrohres so gewählt wird, daß die durch die Diffusion des Ofengases bestimmte Zeitkonstante in dem oben angegebenen
Sinn erreicht wird. Wird die Meßzelle von dem Schutzrohr umgeben, so kann innerhalb des Schutzrohres eine Meßkammer gebildet werden, die mit einer zusätzlichen Öffnung zum Einleiten von Prüfgas zum Zwecke der Eichung versehen werden
kann. Die so ausgebildete Meßeinrichtung läßt in einfacher
Weise die Durchführung des neuen Verfahrens zu.

In der Zeichnung ist ein Ausführungsbeispiel einer neuen Meßeinrichtung für das erfindungsgemäße Verfahren sowie deren
Zeitverhalten gezeigt. Es zeigt:

Fig. 1    einen schematischen Längsschnitt durch eine neue
          Meßeinrichtung bestehend aus einer Meßzelle und
          einem diese ummantelnden Schutzrohr mit der Elektrodenanordnung,

Fig. 2    den Schnitt durch die Meßeinrichtung der Fig. 1
          längs der Linie II-II und

Fig. 3    den zeitlichen Verlauf der Konzentrationsänderung von CO
          im Ofen und in Abhängigkeit davon in der Meßeinrichtung.

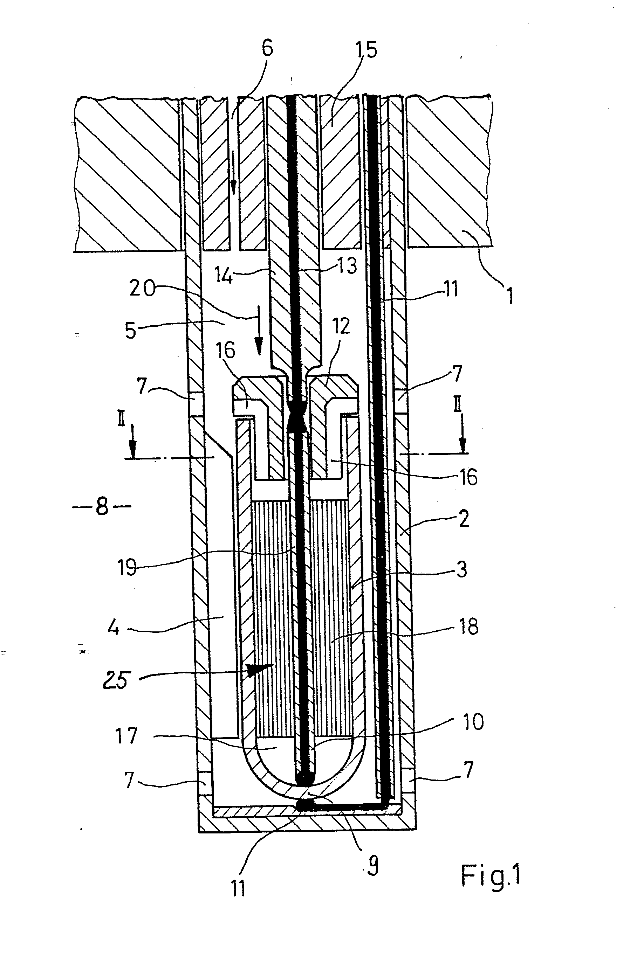

In der Fig. 1 ist schematisch ein die Ofenwandung 1 durchdringendes Schutzrohr 2 gezeigt, das eine Meßzelle 25 ummantelt, die mit drei gleichmäßig auf dem Umfang verteilten
Rippen 4 etwa konzentrisch im Schutzrohr 2 gehalten wird. Im
Inneren des Schutzrohres 2 ist eine Meßkammer 5 ausgebildet,
die entweder zwangsweise über eine Zuführöffnung 6 von außerhalb des Ofens oder durch die Öffnungen 7 mit der Ofenatmosphäre in Verbindung steht, die sich in dem das Schutzrohr 2
umgebenden Ofenraum 8 befindet. Die Meßzelle 25 besteht aus
einem einseitig geschlossenen Elektrolytrohr 3, aus einer Kohlenstoffüllung 18, aus einem Stopfen 12 mit definierten
Verbindungsöffnungen 16 zur Ofenatmosphäre und aus der inneren Elektrode 10. Das Elektrolytrohr 3 weist die eigentliche
Meßstelle 9 an seinem unteren geschlossenen Teil auf, wo die
innere Elektrode 10 an ihm anliegt und außen eine Elektrode
11, die dann im Bereich des Randes des Schutzrohres 2 nach
oben geführt wird. Der innere Elektrodenteil 10 wird zentral
in dem Elektrolytrohr 3 nach oben in die zentrale Öffnung
des Stopfens 12 geführt und steht dort mit einer Zuführungsleitung 13 in Verbindung, welche außerhalb des Ofens zur
Messung der Potentialdifferenz an den Elektroden 10 und 11
herangezogen wird. Die Zuführungsleitung 13 ist in einem
Rohr 14 geführt, das seinerseits durch eine Halterung 15 hindurchgeführt ist, die auch die Zufuhröffnung 6 aufweist.

Der Stopfen 12 besitzt im Ausführungsbeispiel zwei diametral
gegenüberliegende Verbindungsöffnungen 16, welche die Verbindung des Vergleichsraumes 17 in dem Elektrolytrohr 3 mit
der Meßkammer 5 bzw. mit der Ofenatmosphäre herstellen. In
der Vergleichskammer 17 befindet sich die Kohlenstoffüllung
18, die vorteilhaft aus Aktivkohle mit einem typischen Raumgewicht von 0,5 g/cm und einer Oberfläche von 700 $m^2/g$ bestehen kann. Zusätzlich kann ein Katalysator, z.B. feinverteiltes Eisen, aufgebracht werden, um die gewünschte Einstellung des Boudouard-Gleichgewichtes zu fördern. Die Innenelektrode 10 befindet sich in einem keramischen Stützrohr 19,
das dazu dient, die von dem Rohr 14 im Sinne des Pfeiles 20
ausgeübte Federkraft zum Andrücken der Elektrode 10 zu übertragen.

Im Ausführungsbeispiel wird die Zufuhr des Ofengases aus dem
Ofenraum 8 in die Meßkammer 5 durch die Öffnungen 7 bewirkt,
deren Größe so gewählt ist, daß ein nahezu ungehinderter Gasaustausch mit dem Ofenraum 8 möglich ist. Die Zeitkonstante
wird daher kleiner als eine Sekunde gewählt. Die Öffnungen 16
werden so ausgelegt, daß die Zeitkonstante für den Gasaustausch zwischen der Meßkammer 5 und der Vergleichskammer 17, der durch Diffusion stattfindet, eine Zeitkonstante von 1/10 von jener für den Gasaustausch in der Ofenatmosphäre und der angrenzenden Meßkammer 5 ergibt. Zu Prüfzwecken kann die Meßkammer 5 über den Anschluß 6 mit einem Prüfgas gefüllt werden, das auch noch dazu dienen kann, beim Ausbrennen des Ofens den erhöhten Kohlenstoffverbrauch in der Vergleichskammer 17 zu verhindern. Erreicht wird das dadurch, daß dann automatisch Inertgas zugeführt wird, z.B. dann, wenn die Aktivität des Kohlenstoffes unter einem bestimmten Grenzwert, z.B. unter 0,2 sinkt. Die Eichung der Meßeinrichtung kann über die Zufuhr von Prüfgas durch die Öffnung 6 geschehen.

Natürlich ist es auch möglich, andere Meßzellenformen sinngemäß anzuwenden, z.B. eine mit einem Elektrolytplättchen und den Elektroden versehene, mit Kohlenstoff gefüllte Kammer. Ein einseitig geschlossenes Elektrolytrohr, wie es vorher vorgeschlagen wurde, ist aber einfacher zur Herstellung der Meßzelle 25 und hinsichtlich der Diffusionsströmungsverhältnisse besser.

Die Arbeitsweise der neuen Meßeinrichtung nach dem neuen Verfahren soll im folgenden erläutert werden:

In der Tabelle 1 werden zu diesem Zweck für einen C-Pegel von 0,75 % C und 920° C die Meßgrößen für vier Ofenatmosphären mit unterschiedlichem CO-Gehalt bzw. Druck verglichen. Nur das Meßsignal der Aktivitätszelle ist bei allen Atmosphären gleich groß.

Tabelle 1:

| Temperatur T = 1193 K (920° C)<br>Aktivität $a_C$ = 0.50<br>C-Pegel $C_p$ = 0.75 % C | | | Ofenatmosphäre Nr. | | | |
|---|---|---|---|---|---|---|
| | | | 1 | 2 | 3 | 4 |
| Ofenat-<br>mosphäre<br>(Rest N2) | Druck in bar<br>CO in Vol. %<br>H2 in Vol. % | | 1<br>20<br>40 | 1<br>15<br>35 | 1<br>2<br>2 | 0.1<br>2<br>2 |
| konventio-<br>nelle<br>Meßgrößen<br>(Stand der Technik) | $CO_2$ in Vol. %<br>Tpkt. in ° C<br>$E_{Luft}$ in mV | | 0.164<br>-4.2<br>1127 | 0.092<br>-9.0<br>1142 | $1.6*10^{-3}$<br>-55<br>1245 | $1.6*10^{-4}$<br>-71<br>1304 |
| Aktivitätszelle $E_{Akt}$ in mV | | | 35.5 | 35.5 | 35.5 | 35.5 |

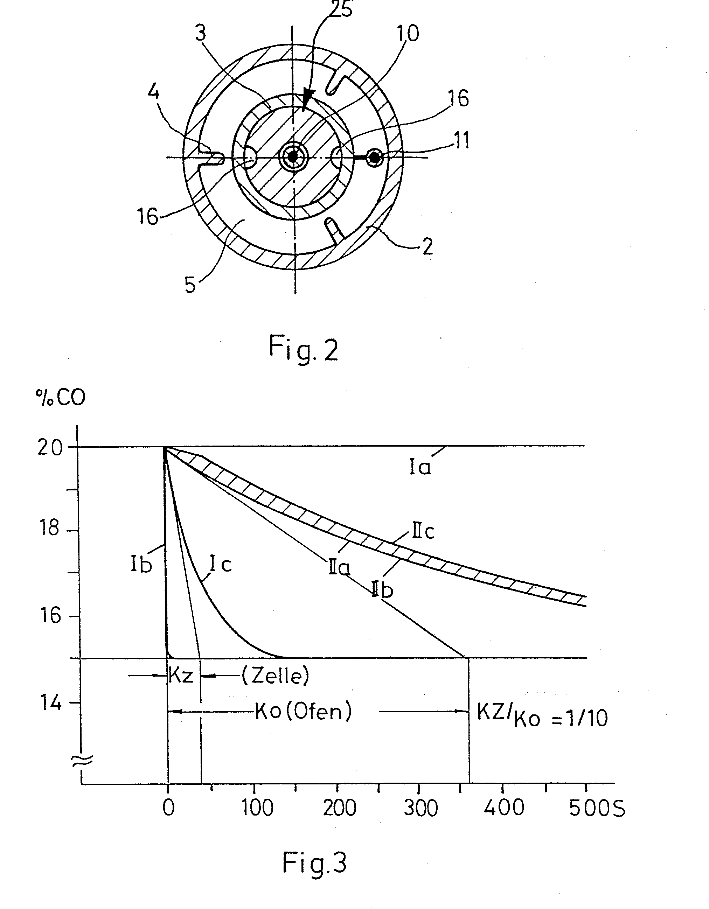

Die neue Meßeinrichtung kann so ausgelegt werden, daß sich das
in der Fig. 3 anhand eines Zeitdiagrammes gezeigte Zeitverhalten ergibt. Die Voraussetzungen für dieses Verhalten sind
in der folgenden Tabelle zusammengestellt.

Tabelle 2:

| | Volumen<br>in cm3 | Gaszufuhr bzw.-austausch<br>in $cm^3$/s (920 $^{O}$C) | | Zeitkonstante<br>in s (92o $^{O}$C) |
|---|---|---|---|---|
| a) Ofen | $2x10^6$ | Gaszufuhr | 5555 | 360 |
| b) Meßkammer | 10 | Prüfgas | 5,55 | 1,8 |
| c) Zelle | 1 | Meßkammergas | 0,028 | 36 |

Zunächst seien die Räume 8, 5 und 17 mit der Atmosphäre Nr. 1 (siehe Tabelle 1) mit einem Gas mit 20 % CO gefüllt.

Fall I

Die Meßkammer 5 wird mit Prüfgas (Atmosphäre Nr. 2) gespült, wobei sich der CO-Gehalt wegen der kleinen Zeitkonstante praktisch nach einer Sprungfunktion verhält (Ib). Aus der Übergangsfunktion der Meßzelle 25 (Ic) kann deren Zeitkonstante abgelesen und die Funktion überprüft werden. Die Ofenatmosphäre bleibt praktisch konstant (Ia).

Fall II

Die Gaszufuhr zum Ofen wird auf die Atmosphäre Nr. 2 umgestellt. Das Zeitverhalten des CO-Gehaltes im Ofen 8 und der Meßkammer 5 sind praktisch identisch (IIa und IIb), während die Meßzelle 25 mit einer geringen Verzögerung nacheilt (IIc). Der durch den unterschiedlichen CO-Gehalt (schraffiert) hervorgerufene Fehler in der Aktivität $a_C$ kann toleriert werden ( $< 3$ %).

Der Atmosphärensprung nach Fall II kann in der Aufkohlungspraxis eintreten, wenn mit einem Gemisch aus Alkohol und Stickstoff gearbeitet wird und im Prozeßverlauf der Alkoholanteil zurückgenommen wird. Bei dem neuen Meßverfahren braucht der Partialdruck des CO-Gehaltes im Ofen nicht beachtet zu werden.

Ansprüche
_____

1.  Verfahren zur Bestimmung der Aktivität des Kohlenstoffes
    in Ofenatmosphären o.dgl., bei dem das Partialdruckverhältnis des Sauerstoffes im Ofengas gegenüber einem Vergleichsgas mit Hilfe der von sauerstoffionenleitenden
    Feststoffzellen abgegebenen elektrischen Spannung festgestellt wird, dadurch gekennzeichnet, daß als Vergleichsgas das Ofengas vorgesehen ist, das bei Ofentemperatur mit Kohlenstoff ins Boudouard-Gleichgewicht
    gebracht wird.

2.  Verfahren nach Anspruch 1, dadurch gekennzeichnet, daß
    der Gasaustausch in der Vergleichsanordnung mit einer
    Zeitkonstanten von 1/10 der des Ofens stattfindet.

3.  Verfahren nach den Ansprüchen 1 und 2, dadurch gekennzeichnet, daß die Zeitkonstante des Gasaustausches in
    der Vergleichsanordnung (Vergleichskammer 17) zwischen
    20 und 100 Sekunden beträgt.

4. Meßeinrichtung zur Durchführung des Verfahrens nach
   einem der Ansprüche 1 bis 3, mit zwei durch das sauerstoffionenleitende Material getrennten Meßräumen, denen
   mindestens je eine Elektrode zugeordnet ist, dadurch
   gekennzeichnet, daß eine Meßzelle (25) vorgesehen ist,
   die mit Kohlenstoff (18) gefüllt und über eine Öffnung
   (16) mit der Ofenatmosphäre (8) beaufschlagbar ist.

5. Meßeinrichtung nach Anspruch 4, dadurch gekennzeichnet,
   daß die Vergleichskammer (17) in einem einseitig geschlossenen Elektrolytrohr (3) angeordnet ist, das an der offenen
   Seite mit einem Stopfen (12) mit den Verbindungsöffnungen
   (16) zur Ofenatmosphäre (Meßkammer 5) abgeschlossen ist.

6. Meßeinrichtung nach Anspruch 5, dadurch gekennzeichnet,
   daß die Verbindungsöffnungen (16) im Verschlußstopfen
   (12) einen solchen Querschnitt aufweisen, daß der durch
   die Diffusion bestimmte Gasaustausch zwischen Meßkammer
   (5) und Vergleichskammer (17) eine Zeitkonstante von einem
   Zehntel der des Gasaustausches im Ofenraum (8) aufweist.

7. Meßeinrichtung nach einem der Ansprüche 4 bis 6, dadurch
   gekennzeichnet, daß die innere Elektrode (10) mittig mit
   Hilfe eines keramischen Stützrohres (19) durch den
   Kohlenstoff (18) hindurchgeführt ist.

8. Meßeinrichtung nach einem der Ansprüche 4 bis 7, dadurch
   gekennzeichnet, daß der Verschlußstopfen (12) eine zentrale Öffnung zur Durchführung der Innenelektrode (10)
   und des diese stützenden Keramikrohres (19) aufweist und
   daß die Innenelektrode (10) im Bereich des Verschlußstopfens (12) mit einer Anschlußelektrode (13) in Verbindung steht, die durch das Außenrohr (2) zu einer
   Meßeinrichtung führt.

9.  Meßeinrichtung nach einem der Ansprüche 4 bis 7, dadurch gekennzeichnet, daß das Elektrolytrohr (3) von einem Schutzrohr (2) ummantelt ist, welches die Außenelektrode (11) aufnimmt.

10. Meßeinrichtung nach einem der Ansprüche 4 bis 9, dadurch gekennzeichnet, daß die Meßkammer (5) innerhalb des Schutzrohres (2) über eine Öffnung (6) mit der Ofenatmosphäre und/oder mit einem Prüfgas beaufschlagbar ist.

0089052

Fig.1

Fig. 2

Fig. 3